(19) Europäisches Patentamt

European Patent Office

Office européen des brevets

(11) **EP 1 119 799 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(51) Int Cl.$^7$: **G05B 11/32**, G05B 7/02, G05B 11/42

(21) Anmeldenummer: **99957867.7**

(22) Anmeldetag: **08.10.1999**

(86) Internationale Anmeldenummer:
**PCT/DE99/03245**

(87) Internationale Veröffentlichungsnummer:
**WO 00/22487 (20.04.2000 Gazette 2000/16)**

(54) **REGELEINRICHTUNG ZUR REGELUNG EINER STRECKE MIT MEHREREN VERKOPPELTEN REGELGRÖSSEN**

CONTROLLING SYSTEM FOR REGULATING A SYSTEM WITH SEVERAL COUPLED CONTROLLED VARIABLES

DISPOSITIF DE REGULATION POUR LA REGULATION D'UN SYSTEME ASSERVI A PLUSIEURS GRANDEURS REGLEES COUPLEES

(84) Benannte Vertragsstaaten:
**AT CH DE ES FR GB LI**

(30) Priorität: **08.10.1998 DE 19846447**
**29.04.1999 DE 19919595**

(43) Veröffentlichungstag der Anmeldung:
**01.08.2001 Patentblatt 2001/31**

(73) Patentinhaber: **SIEMENS AKTIENGESELLSCHAFT**
**80333 München (DE)**

(72) Erfinder:
• **BERGOLD, Stefan**
**D-67269 Grünstadt (DE)**
• **PFEIFFER, Bernd-Markus**
**D-76199 Karlsruhe (DE)**
• **PANDIT, Madhukar**
**D-67663 Kaiserslautern (DE)**

(56) Entgegenhaltungen:
DE-A- 2 447 632          DE-A- 19 510 342
US-A- 4 008 386          US-A- 4 268 784
US-A- 5 400 247

• MUSCH H E ET AL: "MUM-OPTIMAL ADVANCED PID CONTROL OF AN INDUSTRIAL HIGH PURITY DISTILLATION COLUMN" PROCEEDINGS OF THE CONFERENCE ON CONTROL APPLICATIONS,US,NEW YORK, IEEE, Bd. CONF. 3, 1994, Seiten 281-288, XP000681988 ISBN: 0-7803-1873-0

**Beschreibung**

Die Erfindung betrifft eine Regeleinrichtung zur Regelung einer Strecke mit mehreren verkoppelten Regelgrößen nach dem Oberbegriff des Anspruchs 1.

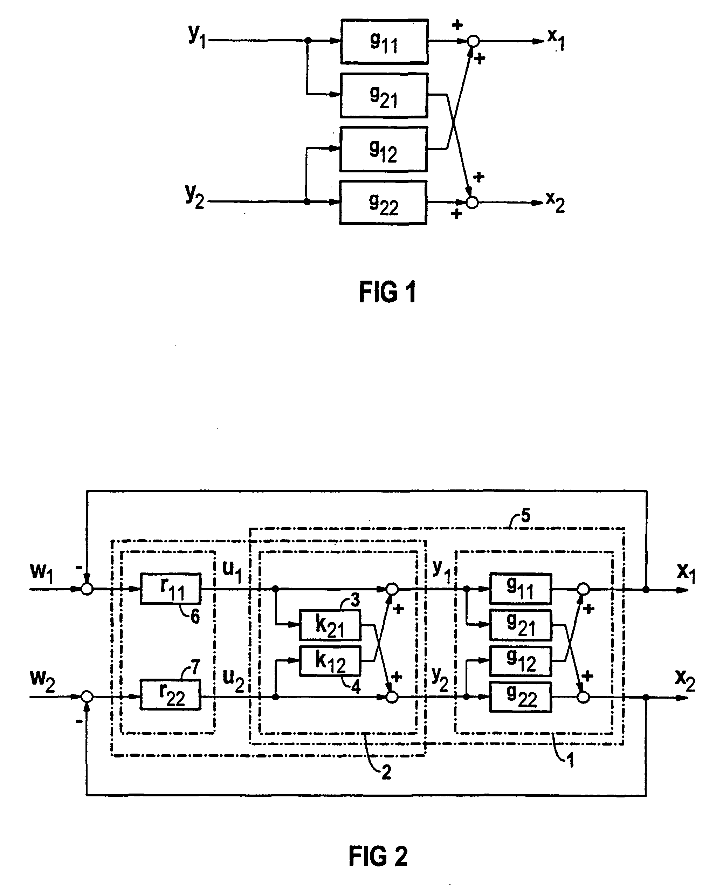

Aus dem Aufsatz "Grundlegende Untersuchungen über die Entkopplung von Mehrfachregelkreisen" von W. Engel, veröffentlicht in "Regelungstechnik", 1966, Heft 12, Seiten 562 bis 568, ist bereits eine Regeleinrichtung für eine Regelstrecke, an der mehrere Größen geregelt werden, die sich gegenseitig beeinflussen, bekannt. Als Möglichkeiten zur Beschreibung einer Strecke mit mehreren verkoppelten Regelgrößen, eines sogenannten Mehrgrößensystems, werden die P-kanonische und die V-kanonische Struktur angegeben. Wenn über die Zusammenhänge und über den Signalverlauf innerhalb einer Mehrfachregelstrecke nichts bekannt ist, wird vorgeschlagen, der Einfachheit halber die P-kanonische Struktur zur Beschreibung zu wählen. In einer P-kanonischen Struktur eines Übertragungssystems hängt jede Ausgangsgröße von den Eingangsgrößen, nicht aber von anderen Ausgangsgrößen ab. Figur 1 zeigt ein Blockschaltbild eines 2x2-Mehrgrößensystems in P-kanonischer Struktur. Die Eingangsgrößen werden als $y_1$ und $y_2$, die Ausgangsgrößen als $x_1$ und $x_2$ bezeichnet. Bei einer Regelstrecke stellen die Eingangsgrößen $y_1$ und $y_2$ an Stellglieder gegebene Stellgrößen, die Ausgangsgrößen $x_1$ und $x_2$ mit meßtechnischen Hilfsmitteln erfaßte Regelgrößen der Strecke dar. Die gezeigte Struktur kann ohne weiteres für eine andere Zahl von Ein und Ausgängen erweitert werden, wie es in dem obengenannten Aufsatz von Engel für ein nxn-System angegeben ist. Die beiden Übertragungsfunktionen $g_{11}$ und $g_{22}$ zwischen der Eingangsgröße $y_1$ und der Ausgangsgröße $x_1$ bzw. zwischen der Eingangsgröße $y_2$ und der Ausgangsgröße $x_2$ werden Hauptstrecken, die Übertragungsfunktionen $g_{12}$ und $g_{21}$ zwischen $y_2$ und $x_1$ bzw. zwischen $y_1$ und $x_2$ werden Koppelstrecken genannt.

Die P-kanonische Struktur hat den Vorteil, daß sie für den Anwender anschaulich ist und daß zur Identifikation der Übertragungsfunktionen in den Haupt- und Koppelstrecken auf übliche Verfahren zurückgegriffen werden kann. Ein dazu geeignetes Identifikationsverfahren ist beispielsweise in der DE 41 20 796 A1 beschrieben. Die Identifikation der Übertragungsfunktionen $g_{11}$ und $g_{21}$ kann nach dem bekannten Verfahren durchgeführt werden, indem die Eingangsgröße $y_2$ konstantgehalten und mit der Eingangsgröße $y_1$ eine Anregungsfunktion an die Übertragungsglieder, d. h. an die zu regelnde Strecke, gelegt wird. Aus den Reaktionen der Ausgangsgrößen $x_1$ und $x_2$ kann eine geeignete Übertragungsfunktion $g_{11}$ bzw. $g_{21}$ berechnet werden. In analoger Weise sind auch die Übertragungsfunktionen $g_{12}$ und $g_{22}$ bei konstantgehaltener Eingangsgröße $y_1$ zu ermitteln.

In dem eingangs genannten Aufsatz von Engel ist weiterhin angegeben, daß ein derartiges Mehrgrößensystem mit einer Einrichtung geregelt werden kann, wie sie in Figur 2 dargestellt ist. Der prinzipielle Aufbau wird wiederum anhand eines 2x2-Mehrgrößensystems beschrieben, das mit den bereits in Figur 1 eingeführten Bezugszeichen versehen ist. Dem Mehrgrößensystem 1 ist ein Entkopplungsnetzwerk 2 in P-kanonischer Struktur vorgeschaltet. Durch Entkopplungsglieder 3 und 4 werden Übertragungsfunktionen $k_{21}$ bzw. $k_{12}$ realisiert, die beispielsweise nach den im Aufsatz von Engel beschriebenen Verfahren ermittelt werden können. Die Entkopplungsglieder $k_{21}$ und $k_{12}$ haben die Aufgabe, die Verkopplung innerhalb des Mehrgrößensystems 1, welches im gezeigten Regelkreis die Strecke darstellt, zu reduzieren, so daß die vorkompensierte Strecke 5, die aus der Strecke 1 und dem vorgeschalteten Entkopplungsnetzwerk 2 gebildet wird, annähernd entkoppelt ist. Annähernd entkoppelt bedeutet hierbei, daß die Wirkungspfade von einem Ausgangssignal $u_1$ eines Reglers 6 mit einer Übertragungsfunktion $r_{11}$ auf die Regelgröße $x_2$ und von einem Ausgangssignal $u_2$ eines Reglers 7 mit einer Übertragungsfunktion $r_{22}$ auf die Regelgröße $x_1$ für den Entwurf der Reglerübertragungsfunktionen $r_{11}$ und $r_{22}$ bedeutungslos sind. Im Idealfall existiert keine Wirkverbindung mehr zwischen der Ausgangsgröße $u_1$ und der Regelgröße $x_2$ bzw. zwischen der Ausgangsgröße $u_2$ und der Regelgröße $x_1$. Die vorkompensierte Strecke 5 zerfällt damit in zwei Eingrößenstrecken mit der Eingangsgröße $u_1$ und der Ausgangsgröße $x_1$ bzw. mit der Eingangsgröße $u_2$ und der Ausgangsgröße $x_2$, für die jeweils ein Eingrößenregler 6 bzw. 7 entworfen werden kann. Ein geeignetes Entwurfsverfahren für PI- oder PID-Regler in Eingrößensystemen ist beispielsweise das Betragsoptimum, das aus der EP 0 707 718 B1 bekannt ist.

Die in Figur 2 gezeigte Regeleinrichtung kann ohne weiteres auf einem Prozeßleitsystem implementiert werden. Verschiedene Reglertypen und Summationspunkte sind als Funktionsbausteine üblicherweise vorhanden; lediglich die Entkopplungsglieder müssen neu implementiert werden.

Die beschriebene Regeleinrichtung zeigt im linearen Betrieb gutes Regelverhalten. Es ist jedoch keine Strategie bekannt, mit welcher in der Praxis auftretende nichtlineare Fälle, beispielsweise wenn die Stellgröße $y_1$ in ihre Begrenzung läuft oder wenn die Regler 6 oder 7 zwischen Hand- und Automatikbetrieb umgeschaltet werden, vorteilhaft behandelt werden können.

Ein Regelungsentwurf unter Verwendung eines Entkopplungsnetzwerks ist weiterhin aus Musch," MUM-Optimal Advanced PID Control of an Industrial High Purity Distillation Column", Proceedings of the Conference on Control Applications , US, NY, IEEE, BD3, 1994, pp.281-288, bzw. US 5 400 247 und DE 2 447 632 bekannt. Im weiteren Stand d. Technik sind Regelungsverfahren zur Vermeidung eines Integrator-Windups in US 4 268 784, US 4 008 386 und DE 19 510 342 genannt.

Der Erfindung liegt die Aufgabe zugrunde, eine Regeleinrichtung zur Regelung einer Strecke mit mehreren verkoppelten Regelgrößen zu schaffen, die sich durch ein verbessertes Regelverhalten auszeichnet.

Zur Lösung dieser Aufgabe weist die neue Regeleinrichtung der eingangs genannten Art die in Anspruch 1 angegebenen Merkmale auf. Vorteilhafte Weiterbildungen sind in den Unteransprüchen beschrieben.

Die Erfindung hat den Vorteil, daß die Regelgröße, selbst wenn die zugehörige Stellgröße sich zuvor in der Stellgrößenbegrenzung befunden hat, schnell auf eine Vorzeichenumkehr der jeweiligen Regeldifferenz am Eingang des Reglers reagiert. Ursache dafür ist, daß die Stellgrößenänderung sofort nach Vorzeichenumkehr der Regeldifferenz eine Umkehrung ihres Vorzeichens vollführt, da der sogenannte Integrator-Windup, d. h. ein Hochlaufen des Integrators eines PI oder PID-Reglers während sich die Stellgröße in ihrer Begrenzung befindet, vermieden wird. Wenn in einer Mehrgrößenregelung nur ein Entkopplungsglied verwendet wird, genügt es bereits, eine Stellgrößenbegrenzung lediglich anhand der mit der Korrekturgröße des Entkopplungsglieds korrigierten Ausgangsgröße des jeweiligen Reglers zu erkennen und mit einer geeigneten Strategie einen Integrator-Windup zu vermeiden.

Zur Vermeidung eines Integrator-Windup können verschiedene Strategien eingesetzt werden. Eine Möglichkeit besteht darin, den Zustand, d. h. den Wert des Integralanteils, und den Ausgang des Reglers bei Erreichen der Stellgrößenbegrenzung konstantzuhalten. Eine weitere Möglichkeit ist, solange die korrigierte Ausgangsgröße bei Anlegen der Regeldifferenz an den Reglerkern die Stellgrößenbegrenzung erreichen oder übersteigen würde, zur Vermeidung des Integrator-Windup eine derart ermittelte Größe anstelle der Regeldifferenz an den Reglerkern zu schalten, daß die korrigierte Ausgangsgröße des Reglers dem Wert der Stellgrößenbegrenzung entspricht. Diese Möglichkeit ist in der EP 0 707 718 B1 ausführlich beschrieben, auf welche bezüglich weiterer Details verwiesen wird.

In vorteilhafter Weise kann ein Standardregler verwendet werden, in den bereits eine Einrichtung zur Vermeidung eines Integrator-Windup bei Stellgrößenbegrenzung sowie eine Einrichtung zur Störgrößenaufschaltung integriert ist, auf welche die erste Korrekturgröße geführt werden kann. In diesem Fall erzeugt das Entkopplungsglied die erste Korrekturgröße in anschaulicher Weise nach einer Übertragungsfunktion, die für ein Entkopplungsnetzwerk in P-kanonischer Form ermittelt ist.

Wenn in einer Strecke wechselseitige Verkopplungen der Regelgrößen bestehen, kann durch ein Entkopplungsnetzwerk mit Entkopplungsgliedern für beide Verkopplungen und durch Korrektur der Reglerausgangsgröße mittels der Störgrößenaufschaltung in vorteilhafter Weise ein besseres Regelverhalten der Mehrgrößenregelung erreicht werden. Eine vorteilhaft einfache Möglichkeit zur Vermeidung des Integrator-Windup bei Erreichen der Stellgrößenbegrenzung ist das Konstanthalten des Zustands und der Ausgangsgröße des jeweiligen Reglers. Dadurch wird erreicht, daß bei einer Vorzeichenumkehr der Regeldifferenz am Eingang des Reglers auch die Stellgrößenänderung sofort eine Umkehrung ihres Vorzeichens vollführt. Damit diese Maßnahme nicht durch eine inzwischen großgewordene Störgröße auf der Störgrößenaufschaltung wirkungslos wird, können die Entkopplungsglieder, deren Korrekturgrößen auf die Störgrößenaufschaltung geführt sind, in vorteilhafter Weise derart ausgebildet werden, daß auch sie bei Erreichen der Stellgrößenbegrenzung ihre Zustände und ihre Korrekturgrößen konstanthalten.

In einer weiter verbesserten Ausbildung des Entkopplungsglieds hält dieses bei Erreichen der Stellgrößenbegrenzung seine jeweilige Korrekturgröße konstant und paßt seinen Zustand entsprechend der Eingangsgröße derart an, daß ein stoßfreies Umschalten bei Verlassen der Stellgrößenbegrenzung erfolgen kann.

Vorteilhaft kann ein Regler derart zwischen Hand- und Automatikbetrieb umschaltbar ausgeführt werden, daß die Umschaltung stoßfrei erfolgt und keine sprung- oder stoßförmige Anregung der korrigierten Ausgangsgröße des Reglers, d. h. der Stellgröße der Strecke, entsteht. Damit werden Einschwingvorgänge und ein unnötiger Verschleiß des Stellglieds vermieden.

Erzeugt ein Regler ein weiteres Steuersignal, das im Handbetrieb gesetzt wird, und wird durch das jeweilige Entkopplungsglied ein vorgegebener Wert der Korrekturgröße bei Handbetrieb auf den Regler gegeben, so wird in vorteilhafter Weise ein unkontrolliertes Anwachsen oder Weglaufen der Korrekturgröße ausgeschlossen, das sonst aufgrund der Verschaltung des Entkopplungsglieds in der Regeleinrichtung entstehen könnte. Den Wert Null als Wert der Korrekturgröße für Handbetrieb vorzugeben, hat den Vorteil, daß keinerlei Änderungen der Stellgröße durch das zugeordnete Entkopplungsglied verursacht werden. Zudem kann ein stoßfreies Umschalten von Hand- auf Automatikbetrieb in vorteilhafter Weise erreicht werden, indem das jeweilige Entkopplungsglied im Handbetrieb seine Zustände auf Null setzt und ein Arbeitspunkt des Entkopplungsglieds durch Überlagerung einer Kompensationsgröße derart eingestellt wird, daß das Entkopplungsglied den vorgegebenen Wert Null erzeugt. Dieser Arbeitspunkt wird nach Rücksetzen des weiteren Steuersignals, d. h. nach Umschalten von Hand- auf Automatikbetrieb, beibehalten.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 3     ein Blockschaltbild einer Regeleinrichtung für ein 2x2-Mehrgrößensystem,
Figur 4     ein Strukturbild eines Standard-PI-Reglers und
Figur 5     ein Blockschaltbild einer Regeleinrichtung für ein 3x3-Mehrgrößensystem.

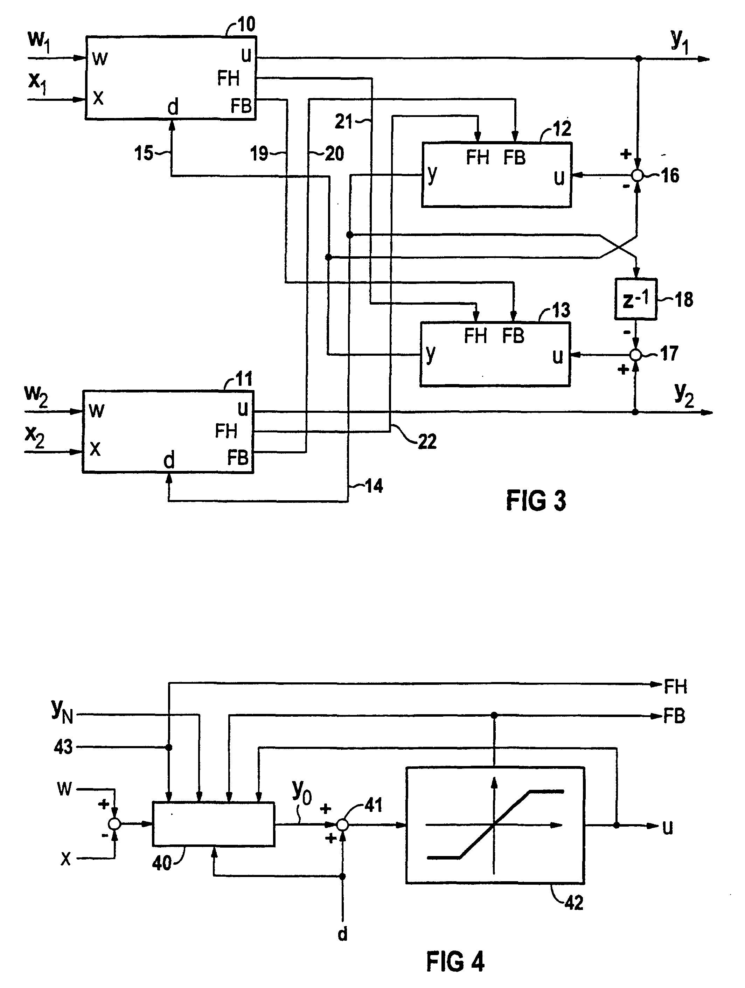

In Figur 3 ist eine Regeleinrichtung für ein 2x2-Mehrgrößensystem, d. h. eine Strecke mit zwei Stellgrößen $y_1$ und $y_2$ sowie zwei Regelgrößen $x_1$ und $x_2$, dargestellt. Die Strecke wurde der Übersichtlichkeit wegen weggelassen. Zur Erzeugung der Stellgrößen $y_1$ und $y_2$ ist jeweils ein PI-Regler 10 bzw. 11 vorgesehen, der intern aus einer Führungsgröße $w_1$ bzw. $w_2$ und der Regelgröße $x_1$ bzw. $x_2$ jeweils eine Regeldifferenz bildet und die Stellgröße $y_1$ bzw. $y_2$ berechnet. Entkopplungsglieder 12 und 13 sind in bekannter Weise für eine Entkopplung des 2x2-Mehrgrößensystems durch ein Entkopplungsnetzwerk in P-kanonischer Form ermittelt und realisieren daher im Automatikbetrieb Übertragungsfunktionen $k_{21}$ bzw. $k_{12}$, die den Übertragungsfunktionen der Entkopplungsglieder 3 bzw. 4 in Figur 2 entsprechen. An den y-Ausgängen der Entkopplungsglieder 12 und 13 gelieferte Korrekturgrößen 14 bzw. 15 sind auf d-Eingänge der Regler 11 bzw. 10 geführt, die für eine Einrichtung zur Störgrößenaufschaltung vorgesehen sind. Durch die Einrichtung zur Störgrößenaufschaltung wird jeweils eine Korrektur der Reglerausgangsgrößen vorgenommen. Die korrigierte Ausgangsgröße wird an u-Ausgängen der Regler 10 bzw. 11 ausgegeben und bildet die Stellgröße $y_1$ bzw. $y_2$ für das 2x2-Mehrgrößensystem. Auf die u-Eingänge der Entkopplungsglieder 12 und 13 sind die korrigierten Ausgangsgrößen $y_1$ bzw. $y_2$ nach Abzug der zweiten Korrekturgröße 15 bzw. der ersten Korrekturgröße 14 durch ein Subtrahierglied 16 bzw. 17 geschaltet. Aus der beschriebenen Verschaltung der Regler 10 und 11 sowie der Entkopplungsglieder 12 und 13 resultiert wiederum ein Entkopplungsnetzwerk in P-kanonischer Form. Die gezeigte Verschaltung hat jedoch den Vorteil, daß die in Standardreglern für Eingrößensysteme bewährten Strategien zur Vermeidung eines Integrator-Windup sowie zur stoßfreien Hand-/Automatikumschaltung nun auch für Mehrgrößensysteme anwendbar sind. Ein Verzögerungsglied 18 mit der Übertragungsfunktion $z^{-1}$, durch welches Werte in einer Abtastregelung um einen Abtastschritt verzögert werden, ist dem Subtrahierglied 17 im Pfad der ersten Korrekturgröße 14 vorgeschaltet, um die durch die Verschaltung des Entkopplungsnetzwerks entstandene algebraische Schleife aufzutrennen. Ohne dieses Verzögerungsglied 18 würde sich im Blockschaltbild nach Figur 3 ein kreisförmiger Signalfluß ergeben und die Berechnungen in einer Abtastregelung könnten nicht in einem Zug durchgeführt werden. Es müßte in jedem Abtastschritt mit großem Rechenaufwand eine iterative Berechnung vorgenommen werden. Dieser Aufwand wird durch das zusätzliche Verzögerungsglied 18 in vorteilhafter Weise vermieden.

Der erste Regler 10 und der zweite Regler 11 liefern an ihrem FB-Ausgang jeweils Steuersignale 19 bzw. 20, die anzeigen, ob die jeweilige korrigierte Ausgangsgröße eine Stellgrößenbegrenzung erreicht hat. Die Steuersignale 19 und 20 sind auf das zweite Entkopplungsglied 13 bzw. das erste Entkopplungsglied 12 geführt, die derart ausgebildet sind, daß sie bei gesetztem Steuersignal 19 oder 20 die zweite Korrekturgröße 15 bzw. die erste Korrekturgröße 14 konstanthalten. Diese Maßnahme ist besonders dann vorteilhaft, wenn auch der jeweilige Regler 10 oder 11 bei Erreichen der Stellgrößenbegrenzung seinen Zustand und Ausgang konstanthält, da in diesem Fall bei einer Vorzeichenumkehr der Regeldifferenz die Änderung der jeweiligen Stellgröße sofort ihr Vorzeichen umkehrt. Dadurch wird ein weiter verbessertes Regelverhalten der Regeleinrichtung nach Erreichen einer Stellgrößenbegrenzung gewährleistet. Die Entkopplungsglieder 12 und 13 halten ihren Ausgang so lange konstant, bis die jeweilige Stellgröße die Begrenzung wieder verlassen hat und das entsprechende Steuersignal 20 bzw. 19 wieder zurückgesetzt wurde. Danach gehen die Entkopplungsglieder 12 und 13 wieder in Automatikbetrieb über.

Um einen stoßfreier. Übergang vom Begrenzungsbetrieb zurück in den Automatikbetrieb zu erreichen, passen die Entkopplungsglieder 12 und 13 ihren Zustand bei jeweils gesetzten Steuersignalen 20 bzw. 19 entsprechend den jeweils an ihren u-Eingängen anliegenden Signalen an.

Zudem liefern der erste Regler 10 und der zweite Regler 11 an ihrem FH-Ausgang jeweils weitere Steuersignale 21 bzw. 22, die gesetzt werden, wenn sich der jeweilige Regler im Handbetrieb befindet. Die Signale 21 und 22 sind auf das jeweilige Entkopplungsglied 13 bzw. 12 geführt und zeigen diesen einen eventuell eingestellten Handbetrieb an. Durch Umschalten der Betriebsart der Entkopplungsglieder 12 und 13 wird erreicht, daß die Größe des am jeweiligen d-Eingang eines Reglers anliegenden Signals bei Handbetrieb nicht über alle Grenzen anwächst oder wegläuft. Wird beispielsweise für den Regler 10 ein konstanter Handwert vorgegeben, so könnte ohne diese Maßnahme das Signal 15 am d-Eingang des Reglers 10 über alle Grenzen anwachsen, obwohl die Übertragungsfunktion des Entkopplungsglieds 13 als solche stabil ist. Aus diesem Grund ist es vorteilhaft, alle auf den jeweiligen in Handbetrieb befindlichen Regler einwirkenden Korrekturgrößen für die Dauer des Handbetriebs auf einen definierten Wert zu setzen. Dabei hat der Wert Null den Vorteil, daß der vorgegebene Handwert unverändert als Stellgröße ausgegeben wird. Damit der Übergang von Handbetrieb in Automatikbetrieb stoßfrei erfolgt, werden zudem die inneren Zustände und ein Arbeitspunkt der auf den betreffenden Regler einwirkenden Entkopplungsglieder gezielt gesetzt. Vorteilhaft ist es, die inneren Zustände der Entkopplungsglieder bei angezeigtem Handbetrieb ebenfalls auf Null zu setzen und den Arbeitspunkt derart zu wählen, daß sich die Zustände und der Ausgang des Entkopplungsglieds bei dem jeweils an dem Entkopplungsglied anliegenden Eingangssignal ebenfalls zu Null berechnen und bei konstantem Eingangssignal dort verbleiben. Meldet ein Regler, beispielsweise der Regler 10 in Figur 3, dem ihm zugeordneten Entkopplungsglied, in diesem Beispiel dem Entkopplungsglied 13, über das weitere Steuersignal, hier das Steuersignal 21, daß er sich auf Handbetrieb befindet, so werden also Zustand und Ausgang des Entkopplungsglieds 13 auf Null gesetzt und der Arbeitspunkt derart gewählt, daß dieser Wert am y-Ausgang bei konstantem Signal am u-Eingang gehalten wird. Nach Rücksetzen des weiteren Steuersignals 21, d. h. nach Umschalten des Reglers 10 in Automatikbetrieb, nimmt das Entkopplungsglied 13 wieder seine eigentliche Übertragungsfunktion an, jetzt allerdings um den zuletzt gültigen Arbeitspunkt. Diese Maßnahme ist insbesondere vorteilhaft beim Einsatz der Regeleinrichtung an Prozessen ohne Ausgleich, d. h. Prozessen, deren Sprungantwort nicht in einen neuen Beharrungszustand einläuft. Ein Beispiel hierfür sind Prozesse mit integrierendem Verhalten. Der Regelkreis wird im Handbetrieb angefahren. Durch die beschriebene Maßnahme wird das Entkopplungsnetzwerk dabei nicht selbständig einschwingen gelassen, sondern gezielt initialisiert, da die Korrekturgrößen ohne die beschriebene Betriebsartenumschaltung der Entkopplungsglieder aufgrund eines eventuell instabilen Verhaltens über alle Grenzen anwachsen könnten.

In Zustandsdarstellung lautet die Übertragungsfunktion eines linearen, dynamischen Entkopplungsglieds in der Betriebsart "Automatik", in welcher das jeweilige Steuersignal nicht gesetzt ist:

$$\underline{x}(k + 1) = \underline{A} \cdot \underline{x}(k) + \underline{b} \cdot [u(k) + z(k)]$$

$$y(k) = \underline{c}^{T} \cdot \underline{x}(k) + d \cdot [u(k) + z(k)]$$

$$z(k + 1) = z(k)$$

mit

$\underline{x}$ -     Zustandsvektor,
$\underline{A}$ -     Systemmatrix,
$\underline{b}$ -     Eingangsmatrix mit der Spaltenanzahl Eins,
$z$ -     Arbeitspunkt,
$\underline{c}^{T}$ -     transponierte Ausgangsmatrix mit der Zeilenanzahl Eins und
$d$ -     Durchgangsfaktor.

In der Betriebsart "Hand", in welcher das weitere Steuersignal am FH-Eingang gesetzt ist, kann die Übertragungsfunktion der Entkopplungsglieder in Zustandsdarstellung durch die Gleichungen beschrieben werden:

$$\underline{x}(k + 1) = 0$$

$$y(k) = 0$$

$$z(k + 1) = -u(k).$$

In der Betriebsart "Begrenzung", in welcher das Steuersignal am FB-Eingang gesetzt ist, kann die Übertragungsfunktion der Entkopplungsglieder in Zustandsdarstellung durch die Gleichungen beschrieben werden:

$$\underline{x}(k+1) = \left[\frac{1}{\underline{c}^{T}(1)}\left(y(k-1) - d\left[u(k) + z(k)\right]\right), 0, 0, \ldots, 0\right]$$

$$y(k) = y(k - 1)$$

$$z(k + 1) = z(k).$$

Darin wird mit $\underline{c}^{T}(1)$ die erste Komponente des transponierten Ausgangsvektors $\underline{c}^{T}$ bezeichnet. Falls diese Komponente Null wird, so wird dieser Umstand durch Umordnen der Zustände umgangen.

Der Arbeitspunkt z wird durch eine Kompensationsgröße eingestellt, welche der Eingangsgröße u des Entkopplungsglieds additiv überlagert wird. In der Betriebsart "Automatik" arbeitet das Entkopplungsglied entsprechend seiner linearen Dynamik, die für ein Entkopplungsnetzwerk in P-kanonischer Form ermittelt wurde, um diesen Arbeitspunkt herum. In der Betriebsart "Hand" werden Zustand $\underline{x}$(k) und Ausgang y(k) auf Null gesetzt und der Arbeitspunkt derart gewählt, daß sich Zustand $\underline{x}$(k) und Ausgang y(k) bei konstantem Eingang u(k) nicht ändern. Sie ändern sich auch nicht unmittelbar, nachdem in die Betriebsart "Automatik" umgeschaltet wurde. Damit ist ein stoßfreies Umschalten gewährleistet. In der Betriebsart "Begrenzung" werden Ausgang y(k) und Arbeitspunkt z(k) gehalten und der Zustand laufend derart angepaßt, daß ein stoßfreies Umschalten in die Betriebsart "Automatik" erreicht wird. Hierzu werden die erste Komponente des Zustandsvektors x(k+1) auf den angegebenen Wert, alle anderen Komponenten auf Null gesetzt.

Die oben angegebenen Zustandsgleichungen gelten für alle Entkopplungsglieder mit Dynamik. Handelt es sich um ein Entkopplungsglied mit reinem Proportionalverhalten, so entfallen die Gleichungen für den Zustand, da dieser bei einem derartigen Entkopplungsglied nicht existiert.

Aus praktischen Gesichtspunkten wird meist Entkopplungsgliedern niedriger Ordnung der Vorzug gegeben. Bewährt haben sich Übertragungsfunktionen bis zu 2. Ordnung, wobei in vielen Fällen bereits ein Entkopplungsglied mit einer Übertragungsfunktion 1. Ordnung ausreicht, bei welcher drei Parameter frei wählbar sind.

Eine Implementierung neuer Funktionsbausteine für Entkopplungsglieder mit den oben angegebenen Betriebsarten und Zustandsgleichungen ist insbesondere dann vergleichsweise aufwendig, wenn sie im Rahmen eines Prozeßleitsystems in ein bestehendes Bedien-/Beobachtungssystem und in ein Melde-/Alarmsystem eingebunden werden müssen. Da ein PID-Regler üblicherweise bereits in systemkonformer Implementierung vorgefertigt zur Verfügung steht, ist es vorteilhaft, Entkopplungsglieder bis zu 1. Ordnung durch eine spezielle Parametrierung des vorhandenen Standard-PID-Reglers zu realisieren. Das setzt voraus, daß der PID-Regler einen realen, d. h. verzögerungsbehafteten, D-Anteil mit separat parametrierbarer Verzögerungszeit und einen bipolaren Wertebereich der Parameter aufweist, bei welchem auch negative Werte der Verstärkung und der Zeitkonstanten zulässig sind. Die Übertragungsfunktion eines realen PID-Reglers lautet:

$$r_{ij}(s) = k_p(1 + \frac{1}{t_i s} + \frac{t_d s}{t_1 s + 1})$$

mit

$k_p$ -   Reglerverstärkung,
$t_i$ -   Nachstellzeit,
$t_d$ -   Vorhaltzeit,
$t_1$ -   Verzögerungszeitkonstante des D-Anteils und
s -   Laplace-Operator.

Zur Realisierung eines Entkopplungsglieds 1. Ordnung wird der I-Anteil des PID-Reglers abgeschaltet, d. h. der Quotient $1/t_i s$ auf Null gesetzt, und die Gleichung des so gewonnenen PD-Reglers auf den Hauptnenner gebracht:

$$r_{ij}(s) = k_p \frac{(t_1 + t_d)s + 1}{t_1 s + 1}.$$

Die Übertragungsfunktion eines Entkopplungsglieds 1. Ordnung, das für ein Entkopplungsnetzwerk in P-kanonischer Form entworfen wurde, lautet im Laplace-Bereich:

$$k_{ij}(s) = k \frac{t_2 s + 1}{t_3 s + 1}.$$

Durch Koeffizientenvergleich der beiden letzten Gleichungen erhält man die Parameter, die am Standard-PID-Regler eingestellt werden müssen, um das gewünschte Übertragungsverhalten des Entkopplungsglieds zu erzielen. Sie lauten:

$$k_p = k,$$

$$t_1 = t_3,$$

$$t_d = t_2 - t_1.$$

Zur Realisierung der Betriebsart "Begrenzung" eines derart implementierten Entkopplungsglieds kann die Betriebsart "Hand" des Standard-PID-Reglers verwendet werden. In der Betriebsart "Automatik" wird der Handwert des PID-Reglers dazu auf den aktuellen Stellwert nachgeführt. Bei Umschalten auf "Hand" wird der aktuelle Stellwert eingefroren. Der Zustand des PID-Reglers wird in Handbetrieb ohnehin so nachgeführt, daß später ein stoßfreies Umschalten zurück von "Hand" auf "Automatik" erfolgen kann. Zur Initialisierung eines derart implementierten Entkopplungsglieds bei Handbetrieb des Hauptreglers kann die Betriebsart "Nachführen" auf Stellgröße "Null" des Standard-PID-Reglers eingestellt werden.

In vorteilhafter Weise werden durch die stoßfreie Hand-/Automatikumschaltung Einschwingvorgänge, die sonst nach dem Einregeln eines Arbeitspunktes im Handbetrieb und Umschalten auf den Automatikbetrieb ablaufen würden, wesentlich verringert.

In Figur 4 ist ein Blockschaltbild eines Standardreglers mit einem PI- oder PID-Reglerkern 40 gezeigt, auf welchen eine aus einer Führungsgröße w und einer Regelgröße x gebildete Regeldifferenz geführt ist. Der Reglerkern 40 ist zur Vermeidung von Integrator-Windup und zur stoßfreien Hand-/Automatikumschaltung zusätzlich zum eigentlichen Regelalgorithmus um einige Funktionen erweitert. Im Automatikbetrieb und wenn die Stellgrößenbegrenzung nicht erreicht wird, erzeugt der Reglerkern 40 eine Ausgangsgröße $y_0$ in bekannter Weise nach dem jeweils verwendeten PI- oder PID-Algorithmus. Beispielsweise bei einem PID-Regler wird die Ausgangsgröße $y_0$ durch additive Überlagerung eines P-Anteils $y_P$, eines I-Anteils $y_I$ und eines D-Anteils $y_D$ berechnet. Durch eine Einrichtung zur Störgrößenaufschaltung 41, die beispielsweise durch ein einfaches Summierglied realisiert werden kann, wird der Ausgangsgröße $y_0$ eine Störgröße d überlagert. Die auf diese Weise korrigierte Ausgangsgröße $y_0$ ist auf eine Einrichtung 42 zur Stellgrößenbegrenzung geschaltet, welche die korrigierte Ausgangsgröße auf den Stellbereich eines in Figur 4 nicht dargestellten, dem Regler nachgeschalteten Stellglieds beschränkt. Durch die Einrichtung 42 wird das Steuersignal FB gebildet, welches anzeigt, ob die korrigierte Ausgangsgröße $y_0$ die Stellgrößenbegrenzung erreicht hat. Die Begrenzung des Reglers wirkt somit auf die Summe der Ausgangsgröße $y_0$ und der am d-Eingang des Reglers anliegenden Störgröße, welche in der in Figur 3 gezeigten Verschaltung der Standardregler 10 und 11 eine durch ein Entkopplungsglied erzeugte Korrekturgröße ist. Durch ein Steuersignal 43 wird ein Handbetrieb des Reglers eingestellt, falls dieses gesetzt ist. Von dem Steuersignal 43 kann unmittelbar das weitere Steuersignal FH abgeleitet werden. Im Handbetrieb gibt der Regler den Wert eines Signals $y_N$ an seinem u-Ausgang aus, sofern das Signal $y_N$ nicht die Stellgrößenbegrenzung erreicht. Um eine stoßfreie Umschaltung von Hand- in Automatikbetrieb zu erreichen, wird der I-Anteil des Reglerkerns 40 unmittelbar nach Einstellen des Automatikbetriebs durch Rücksetzen des Signals 43 folgendermaßen initialisiert:

$$Y_I = y_N - y_P - y_D - d.$$

Das Steuersignal FB ist auf den Reglerkern 40 geführt und leitet bei diesem eine Strategie zur Vermeidung eines Integrator-Windup ein, wenn die mit der Korrekturgröße am d-Eingang korrigierte Ausgangsgröße $y_0$ des Reglerkerns 40 eine Stellgrößenbegrenzung erreicht. Eine Möglichkeit zur Vermeidung eines Integrator-Windup ist, eine derart ermittelte Größe anstelle der Regeldifferenz im PID-Algorithmus des Reglerkerns einzusetzen, daß die korrigierte Ausgangsgröße des Reglers gerade dem Wert der Stellgrößenbegrenzung entspricht. Bei dieser Strategie wird also auch der Wert am d-Eingang des Reglers berücksichtigt. Eine andere Möglichkeit zur Vermeidung des Integrator-Windup ist es, den Zustand und die Ausgangsgröße $y_0$ des Reglerkerns 40 konstantzuhalten, solange die Stellgrößenbegrenzung erreicht wird und das Steuersignal FB gesetzt ist. Diese Strategie hat den Vorteil, daß unmittelbar nach einer Vorzeichenumkehr der Regeldifferenz auch die Änderung der Stellgröße ihr Vorzeichen umkehrt. Dieser Vorteil wird insbesondere dadurch verstärkt, daß auch Entkopplungsglieder, deren Korrekturgrößen auf den d-Eingang des Reglers geführt sind, ihre Korrekturgröße konstanthalten, solange das Steuersignal FB gesetzt ist.

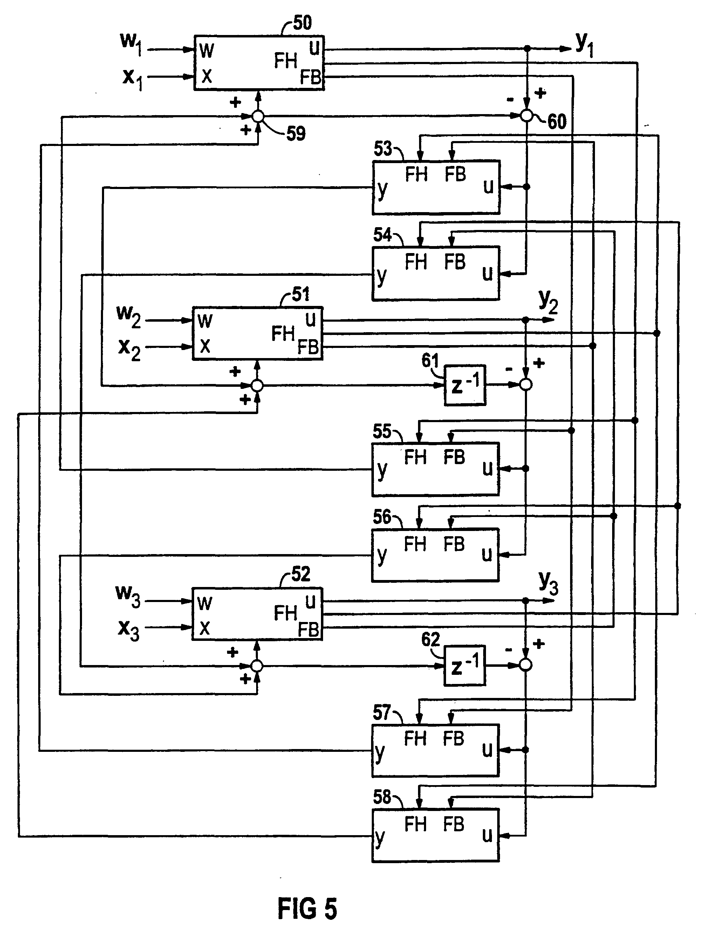

Anhand Figur 5 wird der Aufbau einer Regeleinrichtung für ein 3x3-Mehrgrößensystem beschrieben. Die Regeleinrichtung enthält drei Regler 50, 51 und 52, die jeweils in einfacher Weise als Standard-PI-Regler für Eingrößensysteme ausgebildet sein können. Die Regler 50, 51 und 52 erzeugen jeweils Stellgrößen $y_1$, $y_2$ bzw. $y_3$, die auf ein in Figur 5 nicht dargestelltes 3x3-Mehrgrößensystem als Regelstrecke geführt sind.

An dem 3x3-Mehrgrößensystem erfaßte Regelgrößen $x_1$, $x_2$ und $x_3$ werden in den Reglern 50, 51 bzw. 52 mit Führungsgrößen $w_1$, $w_2$ bzw. $w_3$ verglichen und daraus Regeldifferenzen berechnet. Entkopplungsglieder 53, 54, 55, 56, 57 und 58 dienen jeweils zur Entkopplung der Regelgrößen $x_1$, $x_2$ und $x_3$ des 3x3-Mehrgrößensystems. Diese wurden für ein Entkopplungsnetzwerk mit P-kanonischer Struktur entworfen. Das Entkopplungsglied 53 realisiert eine Übertragungsfunktion $k_{21}$, das Entkopplungsglied 54 eine Übertragungsfunktion $k_{31}$, das Entkopplungsglied 55 eine Übertragungsfunktion $k_{12}$, das Entkopplungsglied 56 eine Übertragungsfunktion $k_{32}$, das Entkopplungsglied 57 eine Übertragungsfunktion $k_{13}$ und das Entkopplungsglied 58 eine Übertragungsfunktion $k_{23}$. Die Indizes i und j in den Bezeichnungen der Übertragungsfunktionen $k_{ij}$ geben an, daß die Regelgröße $x_i$ mit gleichem Index i durch das jeweilige Entkopplungsglied von der Regelgröße $x_j$ mit gleichem Index j entkoppelt wird. Durch ein Summierglied 59 werden die von dem Entkopplungsglied 55 gebildete Korrekturgröße und die Korrekturgröße des Entkopplungsglieds 57 aufsummiert und das Ergebnis auf den d-Eingang des Reglers 50 sowie auf ein Subtrahierglied 60 geschaltet, das diese Summe wiederum von der Stellgröße $y_1$ subtrahiert und so Eingangsgrößen bildet, die auf die u-Eingänge der Entkopplungsglieder 53 und 54 geschaltet sind. In entsprechender Weise sind auch die d-Eingänge der Regler 51 und 52 sowie die u-Eingänge der Entkopplungsglieder 55, 56, 57 und 58 beschaltet. Verzögerungsglieder 61 und 62 dienen analog zum Verzögerungsglied 18 in Figur 3 zur Auflösung einer algebraischen Schleife bei einer zeitdiskreten Realisierung der dargestellten Reglerstruktur. Für Mehrgrößensysteme mit mehr als drei Ein- und Ausgängen kann die in Figur 5 dargestellte Struktur der Regeleinrichtung in entsprechender Weise erweitert werden.

Bei den in den Figuren 3 und 5 gezeigten Regeleinrichtungen können selbstverständlich Entkopplungsglieder weggelassen werden, wenn zwischen den jeweiligen Regelgrößen nur schwache oder keine Kopplungen bestehen. Entfällt beispielsweise in Figur 3 das Entkopplungsglied 13, so kann auch auf das Summierglied 17, das Subtrahierglied 16 und die Beschaltung der Störgrößenaufschaltung des Reglers 10 verzichtet werden.

Bei Regeleinrichtungen für Mehrgrößensysteme, wie sie in den Figuren 2, 3 und 5 dargestellt sind, ist generell zu beachten, daß einzelne Regler nur in Handbetrieb genommen werden sollten, wenn die Strecke die Voraussetzung der verallgemeinerten Diagonaldominanz erfüllt. Bezüglich der Definition der verallgemeinerten Diagonaldominanz eines nxn-Mehrgrößensystems wird auf "Regelungstechnik II: Mehrgrößensysteme, Digitale Regelung", J. Lunze, Springer Verlag Berlin, Heidelberg, New York, 1997, Seiten 307 bis 326, verwiesen.

Die beschriebene Regeleinrichtung ist als zeitdiskreter Regler in einem Automatisierungsgerät oder einer Recheneinheit eines Prozeßleitsystems sowie als analoger Regler mit Analogrechenbausteinen realisierbar. Im letzteren Fall können die Verzögerungsglieder 18, 61 und 62 entfallen.

**Patentansprüche**

1.  Regeleinrichtung zur Regelung einer Strecke mit mehreren verkoppelten Regelgrößen,
    mit Reglern (10, 11), die jeweils einer Regelgröße ($x_1$, $x_2$) zugeordnet sind,
    mit einem der Strecke vorgeschalteten Entkopplungsnetzwerk mit zumindest einem ersten Entkopplungsglied (12), auf welches die Ausgangsgröße ($y_1$) eines ersten Reglers (10) geführt ist und das eine erste Korrekturgröße (14) für die Ausgangsgröße ($y_2$) eines zweiten Reglers (11) zur Verringerung der Kopplung zwischen den Regelgrößen ($x_1$, $x_2$) erzeugt,
    **dadurch gekennzeichnet,**
    **daß** der zweite Regler (11) einen PI- oder PID-Reglerkern (40) aufweist und derart ausgebildet ist, daß der Wert des Integralanteils und die Ausgangsgröße des zweiten Reglers (11) konstantgehalten werden, wenn die mit der ersten Korrekturgröße (14) korrigierte Ausgangsgröße ($y_2$) des Reglerkerns (40) des zweiten Reglers (11) eine Stellgrößenbegrenzung erreicht.

2.  Regeleinrichtung nach Anspruch 1, **dadurch gekennzeichnet,**
    **daß** das erste Entkopplungsglied (12) die erste Korrekturgröße (14) nach einer Übertragungsfunktion ($k_{21}$) erzeugt, die für ein Entkopplungsnetzwerk in P-kanonischer Form ermittelt ist, und
    **daß** der zweite Regler (11) eine Einrichtung (41) zur Störgrößenaufschaltung aufweist, auf welche die erste Korrekturgröße (14) geführt ist.

3.  Regeleinrichtung nach Anspruch 2, **dadurch gekennzeichnet,**
    **daß** das Entkopplungsnetzwerk ein zweites Entkopplungsglied (13) aufweist, auf welches die korrigierte Ausgangsgröße ($y_2$) des zweiten Reglers (11) nach Abzug der ersten Korrekturgröße (14) geführt ist und das eine zweite Korrekturgröße (15) für die Ausgangsgröße ($y_1$) des ersten Reglers (10) nach einer Übertragungsfunktion ($k_{12}$) erzeugt, die für ein Entkopplungsnetzwerk in P-kanonischer Form ermittelt ist,
    **daß** die Ausgangsgröße ($y_1$) des ersten Reglers (10) nach Abzug der zweiten Korrekturgröße (15) auf das erste Entkopplungsglied (12) geführt ist,
    **daß** der erste Regler (10) einen PI- oder PID-Reglerkern (40) und eine Einrichtung (41) zur Störgrößenaufschaltung aufweist, auf welche die zweite Korrekturgröße (15) geführt ist, und
    **daß** der erste Regler (10) derart ausgebildet ist, daß der Wert des Integralanteils und die Ausgangsgröße des ersten Reglers (10) konstantgehalten werden, wenn die mit der zweiten Korrekturgröße (15) korrigierte Ausgangsgröße ($y_1$) des ersten Reglers (10) eine Stellgrößenbegrenzung erreicht.

4. Regeleinrichtung nach einem der Ansprüche 1 bis 3, **dadurch gekennzeichnet,**
**daß** der zweite Regler (11) ein Steuersignal (FB) erzeugt, das bei Erreichen der Stellgrößenbegrenzung gesetzt wird, und
**daß** das erste Entkopplungsglied (12) derart ausgebildet ist, daß es bei gesetztem Steuersignal (FB) seinen Zustand und die erste Korrekturgröße (14) konstanthält.

5. Regeleinrichtung nach einem der Ansprüche 1 bis 3, **dadurch gekennzeichnet,**
**daß** der zweite Regler (11) ein Steuersignal (FB) erzeugt, das bei Erreichen der Stellgrößenbegrenzung gesetzt wird, und
**daß** das erste Entkopplungsglied (12) derart ausgebildet ist, daß es bei gesetztem Steuersignal die erste Korrekturgröße (14) konstanthält und seinen Zustand derart einstellt, daß bei Verlassen der Stellgrößenbegrenzung, d. h. wenn das Steuersignal (FB) zurückgesetzt wird, ein stoßfreies Umschalten erreicht wird.

6. Regeleinrichtung nach einem der vorhergehenden Ansprüche, **dadurch gekennzeichnet,**
**daß** zumindest der zweite Regler (11) zwischen Hand- und Automatikbetrieb umschaltbar ist, derart, daß die Umschaltung bezüglich der korrigierten Ausgangsgröße ($y_2$) des zweiten Reglers (11) stoßfrei erfolgt.

7. Regeleinrichtung nach Anspruch 6, **dadurch gekennzeichnet,**
**daß** der zweite Regler (11) ein weiteres Steuersignal (FH) erzeugt, das im Handbetrieb gesetzt wird, und
**daß** das erste Entkopplungsglied (12) derart ausgebildet ist, daß es bei gesetztem weiterem Steuersignal (FH) einen vorgegebenen Wert der ersten Korrekturgröße (14) erzeugt.

8. Regeleinrichtung nach Anspruch 7, **dadurch gekennzeichnet, daß** der vorgegebene Wert Null ist.

9. Regeleinrichtung nach Anspruch 8, **dadurch gekennzeichnet,**
**daß** das erste Entkopplungsglied (12) derart ausgebildet ist, daß es bei gesetztem weiterem Steuersignal (FH) seinen Zustand auf Null setzt,
**daß** durch Überlagerung einer Kompensationsgröße (z) ein Arbeitspunkt des ersten Entkopplungsglieds (12) derart eingestellt wird, daß es den vorgegebenen Wert Null erzeugt, und
**daß** der Arbeitspunkt nach Rücksetzen des weiteren Steuersignals (FH) beibehalten bleibt.

**Claims**

1. Control device for controlling a subsystem having a plurality of coupled controlled variables,
having controllers (10, 11) that are each assigned to a controlled variable ($x_1$, $x_2$),
having a decoupling network connected upstream of the subsystem containing at least a first decoupling element (12) to which the output variable ($y_1$) of a first controller (10) is fed and that produces a first correcting quantity (14) for the output variable ($y_2$) of a second controller (11) to reduce the coupling between the controlled variables ($x_1$, $x_2$), **characterized in that** the second controller (11) has a PI or PID controller core (40) and is constructed in such a way that the value of the integral-action component and the output variable of the second controller (11) are kept constant if the output variable ($y_2$) of the controller core (40) of the second controller (11), said output variable being corrected with the first correcting quantity (14), reaches a manipulated-variable limit.

2. Control device according to Claim 1, **characterized in that** the first decoupling element (12) generates the first correcting quantity (14) according to a transfer function ($k_{21}$) that is determined for a decoupling network in P-canonical form, and
**in that** the second controller (11) has an influencing-variable feedforward device (41) to which the first correcting quantity (14) is fed.

3. Control device according to Claim 2, **characterized in that** the decoupling network has a second decoupling element (13) to which the corrected output variable ($y_2$) of the second controller (11) is fed after subtracting the first correcting quantity (14) and that generates a second correcting quantity (15) for the output variable ($y_1$) of the first controller (10) according to a transfer function ($k_{12}$) that is determined for a decoupling network in P-canonical form,

**in that** the output variable ($y_1$) of the first controller (10) is fed to the first decoupling element (12) after subtracting the second correcting quantity (15),

**in that** the first controller (10) has a PI or PID controller core (40) and an influencing-variable feedforward device (41) to which the second correcting quantity (15) is fed, and

**in that** the first controller (10) is constructed in such a way that the value of the integral-action component and the output variable of the first controller (40) are kept constant if the output variable ($y_1$) of the first controller (10) corrected with the second correcting quantity (15) reaches a manipulated-variable limit.

4.  Control device according to one of Claims 1 to 3, **characterized**

    **in that** the second controller (11) generates a control signal (FB) that is set if the manipulated-variable limit is reached, and

    **in that** the first decoupling element (12) is constructed in such a way that, if the control signal (FB) is set, it keeps its state and the first correcting quantity (14) constant.

5.  Control device according to one of Claims 1 to 3, **characterized**

    **in that** the second controller (11) generates a control signal (FB) that is set if the manipulated-variable limit is reached and

    **in that** the first decoupling element (12) is constructed in such a way that, if the control signal is set, it keeps the first correcting quantity (14) constant and sets its state in such a way that, on leaving the manipulated-variable limit, i.e. when the control signal (FB) is reset, a bumpless changeover is achieved.

6.  Control device according to one of the preceding claims, **characterized in that** at least the second controller (11) can be changed over between manual and automatic mode in such a way that the changeover takes place bumplessly in regard to the corrected output variable ($y_2$) of the second controller (11).

7.  Control device according to Claim 6, **characterized in that** the second controller (11) generates a further control signal (FH) that is set in the manual mode, and

    **in that** the first decoupling element (12) is constructed in such a way that, if the further control signal (FH) is set, it generates a preset value of the first correcting quantity (14).

8.  Control device according to Claim 7, **characterized**

    **in that** the preset value is zero.

9.  Control device according to Claim 8, **characterized in that** the first decoupling element (12) is constructed in such a way that, if the further control signal (FH) is set, it sets its state to zero,

    **in that** a working point of the first decoupling element (12) is established by superimposing a compensating quantity (z) in such a way that it generates the preset value zero, and

    **in that** the working point is maintained after resetting the further control signal (FH).

**Revendications**

1.  Dispositif de régulation pour la régulation d'un système asservi ayant plusieurs grandeurs réglées couplées,

    avec des régulateurs (10, 11) qui sont associés à chaque fois à une grandeur réglée ($x_1$, $x_2$),

    avec au moins un réseau de découplage branché du côté amont du système,

    avec au moins un premier élément de découplage (12) auquel la grandeur de sortie ($y_1$) d'un premier régulateur (10) est envoyée et qui produit une première grandeur correctrice (14) pour la grandeur de sortie ($y_2$) d'un deuxième régulateur (11) afin de réduire le couplage entre les grandeurs réglées ($x_1$, $x_2$),

    **caractérisé par le fait que**

    le deuxième régulateur (11) comporte un noyau régulateur PI ou PID (40) et est conçu de telle sorte que la valeur de la composante intégrale et la grandeur de sortie du deuxième régulateur (11) sont maintenues constantes lorsque la grandeur de sortie ($y_2$), corrigée avec la première grandeur correctrice (14), du noyau régulateur (40) du deuxième régulateur (11) atteint une limite de grandeur réglante.

2.  Dispositif de régulation selon la revendication 1, **caractérisé par le fait que**

    le premier élément de découplage (12) produit la première grandeur correctrice (14) selon une fonction de transfert ($k_{21}$) qui est déterminée pour un réseau de découplage sous forme canonique P, et

    le deuxième régulateur (11) comporte un dispositif (41) qui est destiné au branchement de grandeur parasite

**EP 1 119 799 B1**

et auquel la première grandeur correctrice (14) est envoyée.

3. Dispositif de régulation selon la revendication 2, **caractérisé par le fait que**
le réseau de découplage comporte un deuxième élément de découplage (13) auquel la grandeur de sortie corrigée (y$_2$) du deuxième régulateur (11) après soustraction de la première grandeur correctrice (14) est envoyée et qui produit une deuxième grandeur correctrice (15) pour la grandeur de sortie (y$_1$) du premier régulateur (10) selon une fonction de transfert (k$_{12}$) qui est déterminée pour un réseau de découplage sous une forme canonique P,
la grandeur de sortie (y$_1$) du premier régulateur (10) après soustraction de la deuxième grandeur correctrice (15) est envoyée au premier élément de découplage (12),
le premier régulateur (10) comporte un noyau régulateur PI ou PID (40) et un dispositif (41) qui est destiné au branchement de grandeur parasite et auquel la deuxième grandeur correctrice (15) est envoyée, et
le premier régulateur (10) est conçu de telle sorte que la valeur de la composante intégrale et la grandeur de sortie du premier régulateur (10) sont maintenues constantes lorsque la grandeur de sortie (y$_1$), corrigée avec la deuxième grandeur correctrice (15), du premier régulateur (10) atteint une limite de grandeur réglante.

4. Dispositif de régulation selon l'une des revendications 1 à 3, **caractérisé par le fait que**
le deuxième régulateur (11) produit un signal de commande (FB) qui est mis à un lorsque la limite de grandeur réglante est atteinte, et
le premier élément de découplage (12) est conçu de telle sorte que, pour un signal de commande (FB) mis à un, il maintient constants son état et la première grandeur correctrice (14).

5. Dispositif de régulation selon l'une des revendications 1 à 3, **caractérisé par le fait que**
le deuxième régulateur (11) produit un signal de commande (FB) qui est mis à un lorsque la limite de grandeur réglante est atteinte, et
le premier élément de découplage (12) est conçu de telle sorte que, lorsque le signal de commande est mis à un, il maintient constante la première grandeur correctrice (14) et il règle son état de telle sorte que, lorsqu'on quitte la limite de grandeur réglante, c'est-à-dire lorsque le signal de commande (FB) est remis à zéro, on a une commutation sans à-coup.

6. Dispositif de régulation selon l'une des revendications précédentes, **caractérisé par le fait que**
au moins le deuxième régulateur (11) peut être commuté entre un fonctionnement manuel et un fonctionnement automatique de telle sorte que la commutation s'effectue sans à-coup en ce qui concerne la grandeur de sortie corrigée (y$_2$) du deuxième régulateur (11).

7. Dispositif de régulation selon la revendication 6, **caractérisé par le fait que**
le deuxième régulateur (11) produit un autre signal de commande (FH) qui est mis à un en fonctionnement manuel, et
le premier élément de découplage (12) est conçu de telle sorte que, lorsque l'autre signal de commande (FH) est mis à un, il produit une valeur prédéterminée de la première grandeur correctrice (14).

8. Dispositif de régulation selon la revendication 7, **caractérisé par le fait que** la valeur prédéterminée est zéro.

9. Dispositif de régulation selon la revendication 8, **caractérisé par le fait que**
le premier élément de découplage (12) est conçu de telle sorte que, lorsque l'autre signal de commande (FH) est mis à un, il met son état à zéro,
en cas de superposition d'une grandeur de compensation (z), un point de fonctionnement dynamique du premier élément de découplage (12) est réglé de telle sorte qu'il produit la valeur prédéterminée zéro, et
le point de fonctionnement dynamique est conservé après remise à zéro de l'autre signal de commande (FH).

**11**

**FIG 1**

**FIG 2**

**FIG 3**

**FIG 4**

**FIG 5**